# EUROPEAN PATENT APPLICATION

(11) **EP 4 811 517 A1**
(43) Date of publication of application: **23.09.2026**
(21) Application number: 24916376.7
(22) Date of filing: 19.08.2024
(51) Int. Cl.: H01M 50/242, H01M 10/6556, A62C 3/16

(54) **BATTERY AND ELECTRIC DEVICE**

(30) Priority: 09.01.2024 CN 202420053079 U
(71) Applicant: Contemporary Amperex Technology Co., Limited, Ningde, Fujian 352100 (CN)
(72) Inventor: TANG, Yu, Ningde, Fujian 352100 (CN); WANG, Wenli, Ningde, Fujian 352100 (CN); YANG, Haiqi, Ningde, Fujian 352100 (CN); HUANG, Xiaoteng, Ningde, Fujian 352100 (CN)
(74) Representative: Lorenz Seidler Gossel Part. mbB
(86) International application number: PCT/CN2024/113187
(87) International publication number: WO 2025/148322

(57) **Abstract**

A battery (10) and an electric device. The battery (10) comprises: a case; at least one group of battery cells (11), each group of battery cells (11) comprising a plurality of battery cells (11) arranged in a first direction; and a pressing strip (12), wherein a channel for accommodating a liquid is provided in the pressing strip (12), and the pressing strip (12) extends in a first direction and is connected to the plurality of battery cells (11).

## Description

### CROSS-REFERENCE TO RELATED APPLICATIONS

The present application is proposed based on Chinese Patent Application No. 202420053079.3, filed on January 9, 2024, and claims priority to the Chinese Patent Application, which is incorporated herein by reference in its entirety.

### TECHNICAL FIELD

The present application relates to the field of battery technologies, and specifically, to a battery and a power consuming apparatus.

### BACKGROUND

In the related art, to improve structural strength of a battery, a clamping bar structure is disposed on a middle portion or a shoulder portion of a battery cell, and a clamping bar is connected to the battery cell, to improve a primary frequency of vibration of the battery and anti-expansion strength of the battery.

However, to enable the clamping bar to provide sufficient structural strength, the clamping bar needs to have a width, and as a result, the clamping bar occupies a large space on the top of the battery cell. Consequently, a space for arranging other structures such as a busbar is limited, and assembly of other components is affected.

### SUMMARY

The present application provides a battery and a power consuming apparatus, to resolve a technical problem that a space on the top of a battery cell is limited and assembly of other components is affected due to a large width of a clamping bar.

According to a first aspect, an embodiment of the present application provides a battery, including:
a box body;
at least one group of battery cells mounted in the box body, where each group of battery cells include a plurality of battery cells arranged in a first direction; and
a clamping bar, where a channel for accommodating a liquid is provided in the clamping bar, and the clamping bar extends in the first direction and is connected to the plurality of battery cells.

In the foregoing technical solution, the channel for accommodating the liquid is disposed in the clamping bar, so that the clamping bar plays a role of enhancing anti-expansion strength, and a cooling liquid can circulate in the channel of the clamping bar, to provide thermal management for the battery cell. The clamping bar and a thermal management component do not need to be separately arranged, thereby optimizing space layout inside the battery and improving space utilization.

In some embodiments, the battery further includes:
a thermal management system, where the thermal management system is mounted in the box body, the thermal management system is configured to perform heat exchange with the battery cell, and the thermal management system is in communication with the channel.

In the foregoing technical solution, the thermal management system is in communication with the channel, so that the cooling liquid in the thermal management system may flow into the channel, and the cooling liquid in the channel may circulate, thereby improving a heat exchange effect, and providing pressure to the cooling liquid in the channel.

In some embodiments, an end portion that is of the clamping bar and that is in the first direction is disposed by extending beyond the battery cell, a connector component is disposed on the end portion of the clamping bar, and the channel is connected to the thermal management system through the connector component.

In the foregoing technical solution, the connector component is disposed, so that the channel in the clamping bar is connected to the thermal management system, thereby implementing communication of the cooling liquid.

In some embodiments, the battery includes:
a beam structure, disposed on a side that is of a group of battery cells and that is in the first direction; and
a connection terminal, disposed at a position that is of the clamping bar and that corresponds to the beam structure and extending in a lateral direction of the clamping bar, where the clamping bar is connected to the beam structure through the connection terminal.

In the foregoing technical solution, the clamping bar is connected to the beam structure, thereby improving structural strength of the clamping bar. The connection terminal is disposed, so that when the clamping bar is connected to the beam structure, it has a small impact on a structure of the clamping bar and sealing performance, and the structural strength is high.

In some embodiments, a plurality of clamping bars that are distributed in a second direction are disposed, at least one clamping bar is connected to the box body, and the second direction intersects with the first direction.

In the foregoing technical solution, the plurality of clamping bars that are distributed in the second direction are disposed, to improve connection strength of the plurality of battery cells and improve overall anti-expansion strength. By connecting at least one clamping bar to the box body, connection strength of the clamping bar is further enhanced, resulting in higher stability.

In some embodiments, a wall thickness M1 of the clamping bar satisfies:
$0.5 mm \leq M 1 \leq 3.5 mm .$

In the foregoing technical solution, the wall thickness of the clamping bar is limited, so that the clamping bar has sufficient structural strength, a heat exchange effect of the cooling liquid in the channel is ensured, and a space occupied in a thickness direction by the clamping bar is controlled within a specific range, thereby improving space utilization.

In some embodiments, a thickness M2 that is of the channel and that is in a direction close to and away from the battery cell satisfies:
$1 mm \leq M 2 \leq 6 mm .$

In the foregoing technical solution, the thickness of the channel is limited, so that a flow pressure drop of the cooling liquid in the channel is controlled within a specific range, the cooling liquid can smoothly circulate, and the space occupied in the thickness direction by the clamping bar is controlled within a specific range, thereby improving space utilization.

In some embodiments, the clamping bar includes:
a spray clamping bar, where the spray clamping bar is disposed corresponding to explosion-proof valves of the plurality of battery cells, and a side that is of the spray clamping bar and that is close to the battery cell is configured to be melted through when the explosion-proof valve is opened.

In the foregoing technical solution, the spray clamping bar is disposed, so that when the spray clamping bar enhances the structural strength, and the battery cell undergoes thermal runaway, the spray clamping bar can be melted through and spray out the cooling liquid in the channel of the spray clamping bar to control the thermal runaway, thereby improving safety performance of the battery.

In some embodiments, a width of the spray clamping bar is greater than a width of the explosion-proof valve.

In the foregoing technical solution, the width of the spray clamping bar is set to be greater than the width of the explosion-proof valve, so that the spray clamping bar can cover the explosion-proof valve, thereby improving a temperature reducing effect of spraying.

In some embodiments, the battery cell includes an end cap, the explosion-proof valve is mounted in the end cap, and the spray clamping bar is adhered to the end cap.

In the foregoing technical solution, the spray clamping bar is adhered to the end cap, so that a connection position of the spray clamping bar avoids the explosion-proof valve as much as possible, thereby preventing excessive adhesion from affecting an external structure of the explosion-proof valve.

In some embodiments, the spray clamping bar is made of a plastic material.

In the foregoing technical solution, the spray clamping bar is set to be made of the plastic material, so that costs are saved, and when the battery cell undergoes thermal runaway, the spray clamping bar can be quickly melted through.

In some embodiments, the spray clamping bar is made of a metal material, a side that is of the spray clamping bar and that faces toward the explosion-proof valve is provided with a through hole directly opposite to the explosion-proof valve, a sealing member for sealing the through hole is disposed in the through hole, and the sealing member is configured to unseal the through hole when the explosion-proof valve is opened.

In the foregoing technical solution, the spray clamping bar is set to be made of the metal material, thereby improving the structural strength of the spray clamping bar. The through hole and the sealing member are set, so that when the battery cell undergoes thermal runaway and the explosion-proof valve is opened, the sealing member can quickly unseal the through hole, to enable the cooling liquid to spray out.

In some embodiments, the battery further includes:
an FPC, arranged in the first direction, where the FPC is disposed on a side that is of the spray clamping bar and that faces away from the battery cell.

In the foregoing technical solution, the FPC is disposed on the spray clamping bar, to optimize space layout and improve space utilization.

In some embodiments, the clamping bar includes:
a cold pipe clamping bar, where the cold pipe clamping bar is adhered to one end that is of end caps of the plurality of battery cells and that is in the second direction.

In the foregoing technical solution, the disposing of the cold pipe clamping bar improves the overall structural strength, and provides thermal management for the battery cell.

In some embodiments, the battery includes a plurality of groups of battery cells arranged in the second direction, and one end of end caps of two adjacent groups of battery cells that are close to each other is adhered to one cold pipe clamping bar.

In the foregoing technical solution, one cold pipe clamping bar located between the two groups of battery cells is connected to the two groups of battery cells, thereby improving structural strength, optimizing space layout, and improving space utilization.

In some embodiments, the cold pipe clamping bar is made of a metal material or a non-metal material.

In some embodiments, the clamping bar includes:
the spray clamping bar, where the spray clamping bar is disposed corresponding to the explosion-proof valves of the plurality of battery cells; and
the cold pipe clamping bar, where the cold pipe clamping bar is adhered to two ends that are of the end caps of the plurality of battery cells and that are in the second direction.

In the foregoing technical solution, the spray clamping bar and the cold pipe clamping bar are disposed, so that overall structural strength is improved, a thermal management effect is improved, and safety performance of the battery is improved.

According to a second aspect, an embodiment of the present application provides a power consuming apparatus, including:
the battery according to any embodiment of the first aspect, where the battery is configured to supply power to the power consuming apparatus.

In the foregoing technical solution, the battery according to any embodiment of the first aspect is used, helping improve use stability and safety of the power consuming apparatus.

### BRIEF DESCRIPTION OF THE DRAWINGS

In order to illustrate the technical solutions in embodiments of the present application more clearly, the following briefly introduces the accompanying drawings required in the embodiments. It should be understood that the following accompanying drawings only show some embodiments of the present application, and therefore should not be considered as limiting the scope of the present application. A person of ordinary skill in the art can also obtain other relevant accompanying drawings according to these accompanying drawings without creative efforts.
FIG. 1 is a schematic diagram of a structure of a vehicle according to some embodiments of the present application;
FIG. 2 is a first schematic diagram of a partial structure of a battery according to some embodiments of the present application;
FIG. 3 is an enlarged view of a position A in FIG. 2;
FIG. 4 is a second schematic diagram of a partial structure of a battery according to some embodiments of the present application;
FIG. 5 is a third schematic diagram of a partial structure of a battery according to some embodiments of the present application;
FIG. 6 is a fourth schematic diagram of a partial structure of a battery according to some embodiments of the present application;
FIG. 7 is an enlarged view of a position B in FIG. 6;
FIG. 8 is a schematic cross-sectional diagram of a partial structure of a battery according to some embodiments of the present application; and
FIG. 9 is a schematic diagram of a cross-sectional structure of a clamping bar according to some embodiments of the present application.

### Reference numerals:

a vehicle 1, a battery 10, a motor 20, and a controller 30;
a battery cell 11, an end cap 110, and an explosion-proof valve 111;
a clamping bar 12, a spray clamping bar 121, a cold pipe clamping bar 122, a connector component 123, a connection component 124, a connection terminal 1241, a sleeving member 125, and a support structure 126; and
a thermal management system 13, a beam structure 14, and an FPC 15.

### DETAILED DESCRIPTION

In order to make the objectives, technical solutions and advantages of embodiments of the present application clearer, the technical solutions in the embodiments of the present application will be clearly described below with reference to the accompanying drawings in the embodiments of the present application. Apparently, the described embodiments are merely some embodiments of the present application rather than all of the embodiments. All other embodiments obtained by a person of ordinary skill in the art based on the embodiments of the present application without making creative efforts shall fall within the protection scope of the present application.

Unless otherwise defined, meanings of all technical and scientific terms used in the present application are the same as those usually understood by a person skilled in the art of the present application. In the present application, the terms used in the specification of the present application are merely intended to describe objectives of specific embodiments, but are not intended to limit the present application. In addition, the terms "include", "have", and any variants thereof in the specification, claims, and accompanying drawings of the present application are intended to cover a non-exclusive inclusion. In the specification and claims, or accompanying drawings of the present application, the terms "first", "second", or the like are intended to distinguish between different objects but do not indicate a specific order or primary-secondary relationship.

An "embodiment" mentioned in the present application means that specific features, structures, or characteristics described with reference to the embodiment may be included in at least one embodiment of the present application. The phrase shown at various locations in the specification does not necessarily refer to the same embodiment, nor an independent or optional embodiment mutually exclusive from another embodiment. A person skilled in the art can clearly and implicitly understand that the embodiments described in the present application can be combined with other embodiments.

In the descriptions of the present application, it should be noted that, unless otherwise explicitly specified or defined, the terms such as "mount", "connect", "connection", and "adhere" should be understood in a broad sense. For example, the connection may be a fixed connection, a detachable connection, or an integral connection; or the connection may be a direct connection, an indirect connection through an intermediate medium, or internal communication between two elements. A person of ordinary skill in the art can understand specific meanings of the foregoing terms in the present application according to a specific situation.

In the present application, the term "and/or" is merely an association relationship for describing associated objects and represents that three relationships may exist. For example, A and/or B may represent the following three cases: Only A exists, both A and B exist, or only B exists. In addition, a character "/" in the present application generally indicates an "or" relationship between contextually associated objects.

In the present application, the term "a plurality of" means two or more (including two). Similarly, "a plurality of groups" means two or more groups (including two groups), and "a plurality of pieces" means two or more pieces (including two pieces).

The battery cell mentioned in the embodiments of the present application may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of the present application. The battery cell may be in a cylindrical shape, a flat shape, a cuboid shape, or other shapes, which is also not limited in the embodiments of the present application. Battery cells are generally divided into three types based on packaging manners: a cylindrical battery cell, a square battery cell, and a pouch battery cell. This is also not limited in the embodiments of the present application.

A battery mentioned in the embodiments of the present application is a single physical module including one or more battery cells to provide a higher voltage and a higher capacity. For example, the battery mentioned in the present application may include a battery module, a battery pack, or the like. Generally, the battery includes a box body for packaging one or more battery cells or a plurality of battery modules. The box body can prevent liquids or other foreign objects from affecting charging or discharging of the battery cell.

The battery cell includes a housing, an electrode assembly, and an electrolyte solution. The housing is configured to accommodate the electrode assembly and the electrolyte solution. The electrode assembly includes a positive electrode plate, a negative electrode plate, and a separator. The battery cell works mainly relying on movement of metal ions between the positive electrode plate and the negative electrode plate. The positive electrode plate includes a positive electrode current collector and a positive electrode active material layer. A surface of the positive electrode current collector is coated with the positive electrode active material layer. A positive electrode current collector not coated with the positive electrode active material layer protrudes from a positive electrode current collector already coated with the positive electrode active material layer. The positive electrode current collector not coated with the positive electrode active material layer is used as a positive electrode tab. By using a lithium-ion battery as an example, a material of the positive electrode current collector may be aluminum, and a positive electrode active material may be lithium cobalt oxide, lithium iron phosphate, ternary lithium, lithium manganese oxide, or the like. The negative electrode plate includes a negative electrode current collector and a negative electrode active material layer. A surface of the negative electrode current collector is coated with the negative electrode active material layer. A negative electrode current collector not coated with the negative electrode active material layer protrudes from a negative electrode current collector already coated with the negative electrode active material layer. The negative electrode current collector not coated with the negative electrode active material layer is used as a negative electrode tab. A material of the negative electrode current collector may be copper, and a negative electrode active material may be carbon, silicon, or the like. To allow a large current to pass through without any fusing, a plurality of positive electrode tabs are provided and stacked together, and a plurality of negative electrode tabs are provided and stacked together.

A material of the separator may be polypropylene (PP), polyethylene (PE), or the like. In addition, the electrode assembly may be a wound structure or a stacked structure. This is not limited in the embodiments of the present application.

In recent years, new energy vehicles have been rapidly developed. In the field of electric vehicles, a power battery, as a power source of an electric vehicle, plays an important role that is irreplaceable. The battery includes a box body and a plurality of battery cells accommodated in the box body. As a core part of the new energy vehicle, the battery has high requirements in terms of safety and cycle life.

In a common battery, to improve structural strength of the battery, a clamping bar structure is disposed on a middle portion or a shoulder portion of a battery cell, and a clamping bar is connected to the battery cell, to improve a primary frequency of vibration of the battery and anti-expansion strength of the battery. However, to enable the clamping bar to provide sufficient structural strength, the clamping bar needs to have a width, and as a result, the clamping bar occupies a large space on the top of the battery cell. Consequently, a space for arranging other structures such as a busbar and a sampling component is limited. When a requirement for disposing other components, for example, a spray component exists, there is easily no assembly space, affecting assembly of the other components.

Based on the foregoing consideration, to resolve the technical problem that the space on the top of the battery cell is limited and assembly of the other components is affected due to a large width of the clamping bar. The present application designs a battery, including a box body, at least one group of battery cells, and a clamping bar. Each group of the battery cells include a plurality of battery cells arranged in a first direction, a channel for accommodating a liquid is provided in the clamping bar, and the clamping bar extends in the first direction and is connected to the plurality of battery cells.

In the battery of this structure, the channel for accommodating the liquid is disposed in the clamping bar, so that the clamping bar plays a role of enhancing anti-expansion strength, and a cooling liquid can circulate in the channel of the clamping bar, to provide thermal management for the battery cell. The clamping bar and a thermal management component do not need to be separately arranged, thereby optimizing space layout inside the battery and improving space utilization.

The battery disclosed in the embodiments of the present application may be used in, but is not limited to being used in, a power consuming apparatus like a vehicle, a ship, or an aircraft. A power supply system provided with the power consuming apparatus may be used, where the power consuming apparatus includes the battery thermal management system, the battery, and the like that are disclosed in the present application. In this way, it is beneficial to expand the application scope of the battery thermal management system, and reduce assembly difficulty of the battery thermal management system.

An embodiment of the present application provides a power consuming apparatus using a battery as a power supply. The power consuming apparatus may be, but is not limited to, a mobile phone, a tablet computer, a notebook computer, an electric toy, an electric tool, an electric scooter, an electric vehicle, a ship, a spacecraft, or the like. The electric toy may be a stationary or mobile electric toy, for example, a game console, an electric vehicle toy, an electric ship toy, or an electric aircraft toy. The spacecraft may include an airplane, a rocket, a space shuttle, a spaceship, and the like.

For ease of description, the following embodiments are described by using an example in which a power consuming apparatus according to an embodiment of the present application is a vehicle 1.

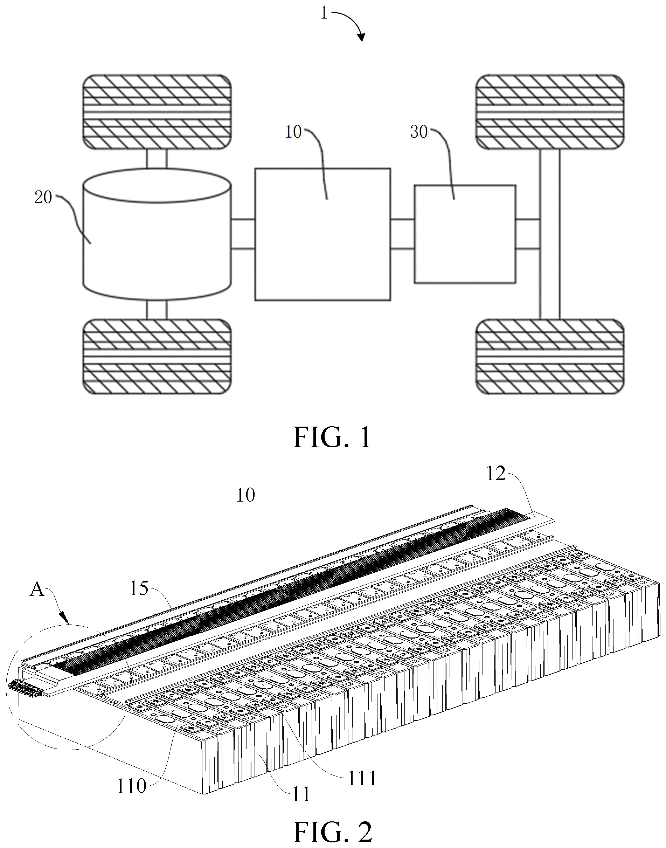

FIG. 1 is a schematic diagram of a structure of a vehicle 1 according to an embodiment of the present application. The vehicle 1 may be a fuel vehicle, a gas vehicle, or a new energy vehicle. The new energy vehicle may be an all-electric vehicle, a hybrid electric vehicle, a range-extended electric vehicle, or the like. A motor 20, a controller 30, and a battery 10 may be disposed inside the vehicle 1. The controller 30 is configured to control the battery 10 to supply power to the motor 20. For example, the battery 10 may be disposed at the bottom, in the front, or in the rear of the vehicle 1. The battery 10 may be configured to supply power to the vehicle 1. For example, the battery 10 may be used as an operating power supply of the vehicle 1 and used for a circuit system of the vehicle 1, for example, may be used for operating electricity requirements during starting, navigation, and operation of the vehicle 1. In another embodiment of the present application, the battery 10 may be used not only as the operating power supply of the vehicle 1, but also as a driving power supply of the vehicle 1, to alternatively or partially replace fuel or natural gas to provide driving power for the vehicle 1.

To satisfy different electricity requirements, the battery 10 may include a plurality of battery cells 11. The plurality of battery cells 11 may be connected in series, connected in parallel, or connected in a series-parallel configuration. The series-parallel configuration refers to a combination of series and parallel connections.

As shown in FIG. 2, FIG. 2 is an exploded view of a structure of the battery 10 according to an embodiment of the present application. The battery 10 includes a box body and a plurality of battery cells 11. The battery cell 11 is configured to be accommodated in the box body. The box body is configured to provide an assembly space for the battery cell 11, and the box body may use various structures.

In some embodiments, the box body may include a first box body and a second box body. The first box body and the second box body cover and fit each other. The first box body and the second box body jointly define the assembly space for accommodating the battery cell 11. The second box body may be a hollow structure with one open end. The first box body may be a plate-like structure. The first box body covers and fits an open side of the second box body, so that the first box body and the second box body jointly define the assembly space. Alternatively, the first box body and the second box body may each be a hollow structure with one open side. The open side of the first box body covers and fits the open side of the second box body. Certainly, the box body formed by the first box body and the second box body may be of a plurality of shapes, for example, a cylindrical shape or a cuboid shape.

In the battery 10, the plurality of battery cells 11 may be connected in series, connected in parallel, or connected in a series-parallel configuration. The series-parallel configuration means that the plurality of battery cells 11 are connected in series and in parallel. The plurality of battery cells 11 may be directly connected in series, connected in parallel, or connected in the series-parallel configuration, and then a whole formed by the plurality of battery cells 11 is accommodated in the box body. Certainly, the battery 10 may alternatively be in a form of a battery module formed by the plurality of battery cells 11 that are first connected in series, connected in parallel, or connected in the series-parallel configuration, and then a plurality of battery modules are connected in series, connected in parallel, or connected in the series-parallel configuration to form a whole, which is accommodated in the box body. The battery 10 may further include another structure. For example, the battery 10 may further include a bus component, configured to implement an electrical connection between the plurality of battery cells 11.

Each battery cell 11 may be a secondary battery or a primary battery. Each battery cell 11 may alternatively be a lithium-sulfur battery, a sodium-ion battery, or a magnesium-ion battery, but is not limited thereto. The battery cell 11 may be in a cylinder shape, a flat shape, a cuboid shape, or other shapes. For example, in FIG. 1, the shape of the battery cell 11 is a cuboid.

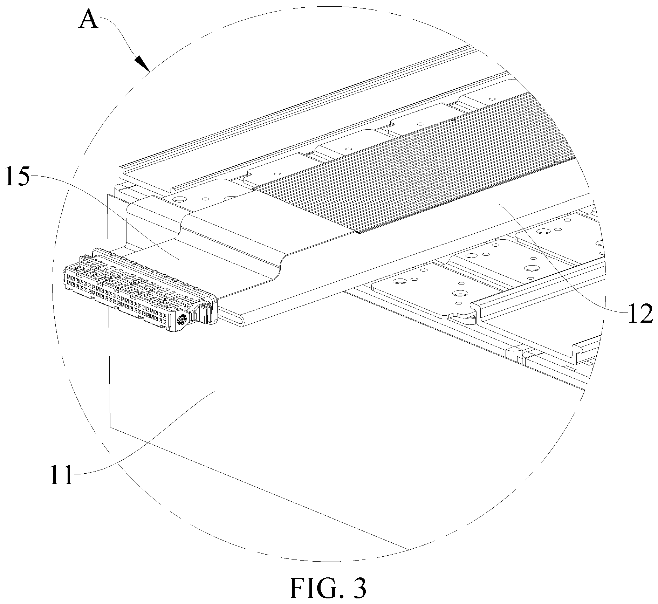

According to some embodiments of the present application, as shown in FIG. 2 to FIG. 8, the present application provides a battery 10. The battery 10 includes a box body, at least one group of battery cells 11, and a clamping bar 12.

The box body has an assembly space for accommodating the battery cell 11, and the at least one group of battery cells 11 are mounted in the assembly space. Each group of battery cells 11 include a plurality of battery cells 11 arranged in a first direction. The plurality of battery cells 11 are disposed, to improve a capacity of the battery 10.

A channel for accommodating a liquid is provided in the clamping bar 12, and the clamping bar 12 extends in the first direction and is connected to the plurality of battery cells 11.

In this implementation, the channel for accommodating the liquid is provided in the clamping bar 12, so that a cooling liquid or another liquid can circulate in the channel. For example, when the cooling liquid circulates in the channel, thermal management can be provided for the battery cell 11, thereby improving operation stability of the battery cell 11.

The clamping bar 12 extends and is disposed in the first direction, so that the clamping bar 12 can be connected to a group of battery cells 11 arranged in the first direction, thereby improving structural stability and anti-expansion strength of the group of the plurality of battery cells 11. In an example, an extension direction of the channel in the clamping bar 12 can be disposed in an extension direction of the clamping bar 12, which can reduce processing difficulty of the clamping bar 12 and reduce production costs. In another example, the channel in the clamping bar 12 may be provided in another shape, for example, a regular shape like a corrugation or a zigzag, or an irregular shape, to accelerate or decelerate a flow rate in the channel, and improve or reduce structural strength at a specific position of the clamping bar 12. It may be understood that the shape of the channel is not specifically limited herein.

In this implementation, to reduce a space occupied by the clamping bar 12, the clamping bar 12 may be disposed in a flat shape, so that the clamping bar 12 is more easily adhered to a surface of the battery cell 11, and may further play a role of increasing a connection area and a heat exchange area, and improving connection strength and heat exchange efficiency. The clamping bar 12 may be adhered to the battery cell 11 through a thermally conductive adhesive with good thermal conductivity, to improve thermal conductivity efficiency.

According to this embodiment of the present application, the channel for accommodating the liquid is disposed in the clamping bar 12, so that the clamping bar 12 plays a role of enhancing anti-expansion strength, and the cooling liquid can circulate in the channel of the clamping bar 12, to provide thermal management for the battery cell 11. The clamping bar 12 and a thermal management component do not need to be separately arranged, thereby optimizing space layout inside the battery 10 and improving space utilization.

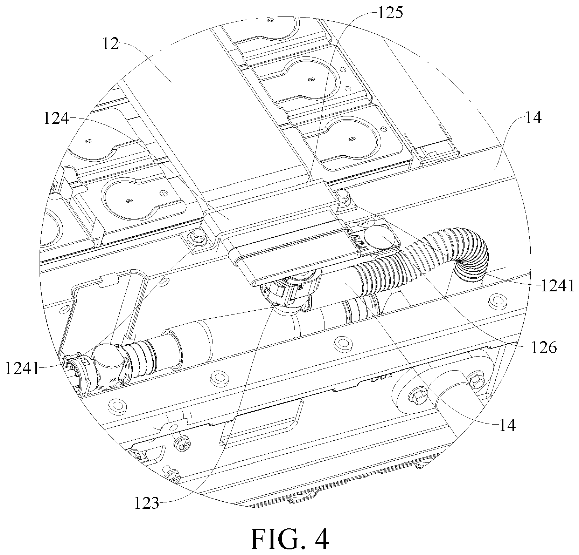

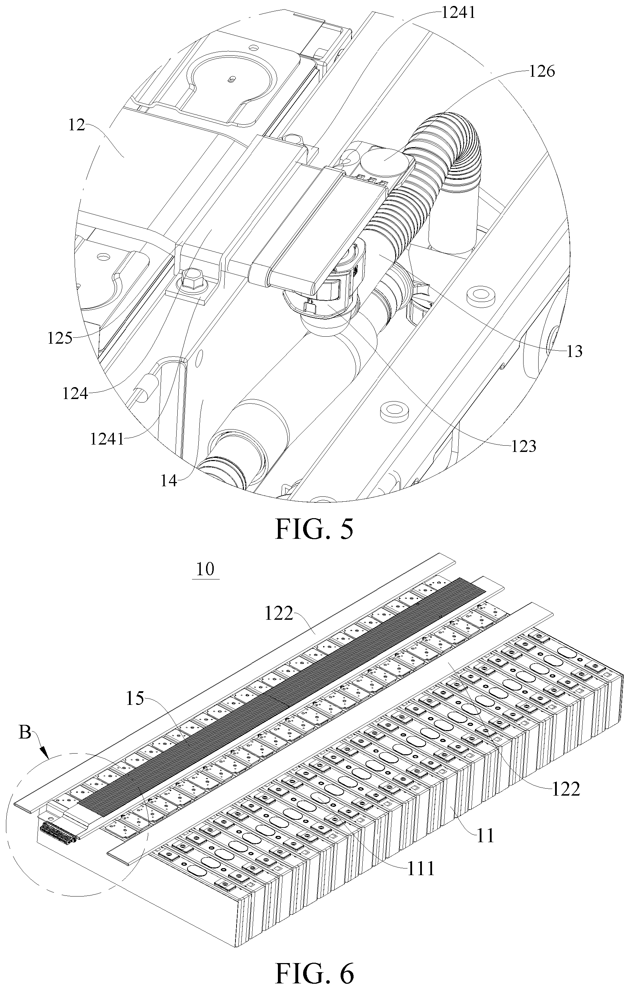

According to some embodiments of the present application, as shown in FIG. 4 and FIG. 5, the battery 10 may further include a thermal management system 13. The thermal management system 13 may be mounted in the box body. The thermal management system 13 may be configured to perform heat exchange with the battery cell 11. The thermal management system 13 may be in communication with the channel.

The thermal management system 13 may include a heat exchange component. The heat exchange component is mounted in the box body. The cooling liquid circulates in the heat exchange component. The heat exchange component performs heat exchange with the battery cell 11, thereby improving operation stability of the battery cell 11. The heat exchange component may be in communication with the channel of the clamping bar 12, so that the cooling liquid circulating in the heat exchange component can flow into the channel, and the clamping bar 12 can play a role of assisting the thermal management system 13 in performing thermal management on the battery cell 11. In addition, the cooling liquid of the thermal management system 13 can provide pressure to the cooling liquid in the channel, to drive the cooling liquid in the channel to circulate, thereby improving a heat exchange effect.

According to this embodiment of the present application, the thermal management system 13 is in communication with the channel, so that the cooling liquid in the thermal management system 13 may flow into the channel, and the cooling liquid in the channel may circulate, thereby improving the heat exchange effect, and providing pressure to the cooling liquid in the channel.

According to some embodiments of the present application, as shown in FIG. 4 and FIG. 5, an end portion that is of the clamping bar 12 and that is in the first direction may be disposed by extending beyond the battery cell 11, a connector component 123 may be disposed on the end portion of the clamping bar 12, and the channel may be connected to the thermal management system 13 through the connector component 123.

In this implementation, the end portion that is of the clamping bar 12 and that is in the first direction may be disposed by extending beyond the battery cell 11 and may be disposed in a sealed configuration. Moreover, the connector component 123 may be disposed on a side that faces toward the battery cell 11 and that is of the end portion that is of the clamping bar 12 and that extends beyond the battery cell 11. The connector component 123 may be connected to a pipeline of the thermal management system 13. For example, the connector component 123 may be a quick-connect connector, or the like, which facilitates convenient mounting and connection, and automatically shuts off when the connector component 123 is disconnected, making it not easy for the cooling liquid to leak.

The connector component 123 is disposed, so that the channel in the clamping bar 12 is connected to the thermal management system 13, thereby implementing communication of the cooling liquid.

According to some embodiments of the present application, as shown in FIG. 4 and FIG. 5, the battery 10 may include a beam structure 14 and a connection terminal 1241. The beam structure 14 may be disposed on a side that is of a group of battery cells 11 and that is in the first direction. The connection terminal 1241 may be disposed at a position that is of the clamping bar 12 and that corresponds to the beam structure 14, and extend in a lateral direction of the clamping bar 12. The clamping bar 12 may be connected to the beam structure 14 through the connection terminal 1241.

In this implementation, the beam structure 14 may be a support cross beam disposed in the box body or a frame beam forming a frame structure of the box body. For example, the beam structure 14 may be an anti-expansion beam in the box body. The beam structure 14 is disposed on a side that is of a group of battery cells 11 and that is in the first direction, to suppress expansion of the battery cell 11.

The end portion that is of the clamping bar 12 and that is in the first direction may be disposed by extending beyond the battery cell 11 and extending to the anti-expansion beam. The connection terminal 1241 is disposed on the clamping bar 12, and is located at the position that is of the clamping bar 12 and that corresponds to the beam structure 14. The connection terminal 1241 is connected to the clamping bar 12 and extends in the lateral direction of the clamping bar 12. The connection terminal 1241 is fixedly connected to the anti-expansion beam, so that the clamping bar 12 is fixedly connected to the anti-expansion beam. The connection terminal 1241 may be connected through bolting, adhesion, snapping, or the like. This is not limited herein.

In an example, the connection terminal 1241 may be integrally formed with the clamping bar 12.

In another example, as shown in FIG. 4 and FIG. 5, the battery 10 may include a connection component 124. The connection component 124 may be disposed in a U-shape, so that the connection component 124 is formed with two connection terminals 1241. A sleeving member 125 may be disposed at the position that is of the clamping bar 12 and that corresponds to the beam structure 14. The sleeving member 125 is sleeved outside the clamping bar 12, and can enhance a load-bearing force of the clamping bar 12 at the corresponding position. The connection component 124 is disposed on a side that is of the sleeving member 125 and that faces away from the beam structure 14, to apply a compression force that is toward the beam structure 14 to the sleeving member 125, thereby fixedly connecting the clamping bar 12 to the beam structure 14. By disposing the sleeving member 125 and the connection component 124, when the clamping bar 12 is fixedly connected to the beam structure 14, a force directly acting on the clamping bar 12 is small, so that the clamping bar 12 is not prone to buckling, and impact on structural strength of the clamping bar 12 is small. In addition, a connection hole does not need to be provided on the clamping bar 12, which has small impact on sealing performance of the clamping bar 12.

According to this embodiment of the present application, the clamping bar 12 is connected to the beam structure 14, thereby improving structural strength of the clamping bar 12. The connection terminal 1241 is disposed, so that when the clamping bar 12 is connected to the beam structure 14, it has a small impact on a structure of the clamping bar 12 and sealing performance, and the structural strength is high.

In some embodiments, as shown in FIG. 4 and FIG. 5, the end portion that is of the clamping bar 12 and that is in the first direction is disposed by extending beyond the anti-expansion beam, and the connector component 123 is disposed on a portion that is of the clamping bar 12 and that extends beyond the anti-expansion beam. A support structure 126 is further disposed on the portion of the clamping bar 12 that extends beyond the anti-expansion beam. The support structure 126 is connected to a side of the clamping bar 12, and is fixedly connected to a side wall that is of the anti-expansion beam and that faces away from the battery cell 11, to provide support to the clamping bar 12. When the clamping bar 12 is connected to the pipeline of the thermal management system 13 through the connector component 123, it is not easy to deform the clamping bar 12 by applying a pulling force or a pressing force to the clamping bar 12, thereby ensuring that the channel in the clamping bar 12 is unobstructed, and ensuring overall structural strength and use stability.

According to some embodiments of the present application, as shown in FIG. 2, FIG. 3, and FIG. 6, a plurality of clamping bars 12 that are distributed in a second direction may be disposed, at least one clamping bar 12 may be connected to the box body, and the second direction may intersect with the first direction.

In this implementation, the plurality of clamping bars 12 may be disposed, and the plurality of clamping bars 12 may be distributed in the second direction, where the second direction intersects with the first direction, so that the plurality of clamping bars 12 can be respectively connected to various positions that are in the second direction and that are of end caps 110 of the battery cells 11, to improve structural strength of each group of battery cells 11, and further improve anti-expansion strength of the battery 10.

At least one of the plurality of clamping bars 12 may be connected to the box body. The clamping bar 12 is connected to a structural member of the box body, thereby improving structural strength of the clamping bar 12 and the entire structure, and further improving anti-expansion strength of the battery 10.

It should be noted that, a quantity of the clamping bars 12 is not limited herein. A quantity of the battery cells 11 and the overall space layout may be set to be two or more. When more than two clamping bars 12 are disposed, the plurality of clamping bars 12 may be alternately connected to the box body in the second direction, or a corresponding clamping bar 12 is connected to the box body in a symmetrical manner in the second direction, so that force bearing is more balanced and stability is improved.

In this embodiment of the present application, the plurality of clamping bars 12 that are distributed in the second direction are disposed, to improve connection strength of the plurality of battery cells 11 and improve overall anti-expansion strength. By connecting at least one clamping bar 12 to the box body, connection strength of the clamping bar 12 is further enhanced, resulting in higher stability.

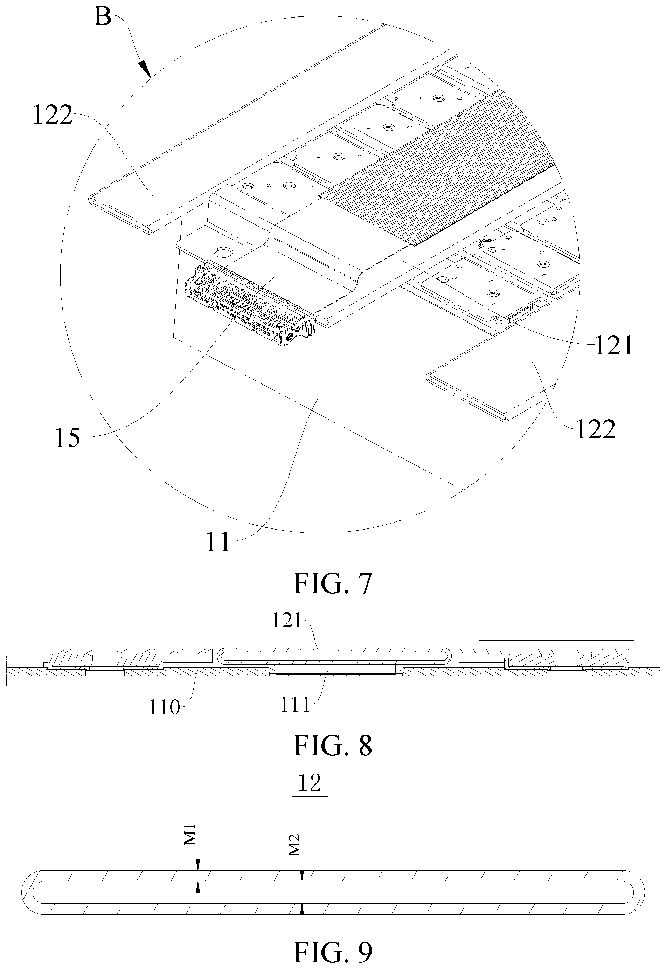

According to some embodiments of the present application, as shown in FIG. 9, a wall thickness M1 of the clamping bar 12 may satisfy:
$0.5 mm \leq M 1 \leq 3.5 mm .$

It may be understood that a larger wall thickness of the clamping bar 12 has higher strength. However, considering thermal management performance of the clamping bar 12, the thickness of the clamping bar 12 is not supposed to be excessively large. The wall thickness of the clamping bar 12 is limited, so that the clamping bar 12 has sufficient structural strength, the heat exchange effect of the cooling liquid in the channel is ensured, and a space occupied in a thickness direction by the clamping bar 12 is controlled within a specific range, thereby improving space utilization.

A value range of the wall thickness M1 of the clamping bar 12 is [0.5 mm to 3.5 mm]. Specifically, the wall thickness M1 of the clamping bar 12 may be 0.5 mm, 1 mm, 1.5 mm, 2 mm, 2.5 mm, 3 mm, 3.5 mm, or another value between 0.5 mm and 3.5 mm.

According to some embodiments of the present application, as shown in FIG. 9, a thickness M2 that is of the channel and that is in a direction close to and away from the battery cell 11 may satisfy:
$1 mm \leq M 2 \leq 6 mm .$

The thickness of the channel is limited, so that a flow pressure drop of the cooling liquid in the channel is controlled within a specific range, the cooling liquid can smoothly circulate, and the space occupied in the thickness direction by the clamping bar 12 is controlled within a specific range, thereby improving space utilization.

A value range of the thickness M2 that is of the channel and that is in the direction close to and away from the battery cell 11 is [1 mm to 6 mm]. Specifically, M2 may be 1 mm, 1.5 mm, 2 mm, 2.5 mm, 3 mm, 3.5 mm, 4 mm, 4.5 mm, 5 mm, 5.5 mm, 6 mm, or another value between 1 mm to 6 mm.

According to this embodiment of the present application, the wall thickness of the clamping bar 12 is limited, so that while the clamping bar 12 has sufficient structural strength, the space occupied in the thickness direction by the clamping bar 12 is controlled within a specific range, thereby improving space utilization.

According to some embodiments of the present application, as shown in FIG. 6 to FIG. 8, the clamping bar 12 may include a spray clamping bar 121. The spray clamping bar 121 may be disposed corresponding to explosion-proof valves 111 of the plurality of battery cells 11. A side that is of the spray clamping bar 121 and that is close to the battery cell 11 may be configured to be melted through when the explosion-proof valve 111 is opened.

In this implementation, the spray clamping bar 121 may be disposed corresponding to explosion-proof valves 111 of a group of a plurality of battery cells 11, so that the spray clamping bar 121 may play a role of spraying the cooling liquid to the battery cell 11 to reduce a temperature when the battery cell 11 undergoes thermal runaway.

During actual execution, a side that is of the spray clamping bar 121 and that is close to the battery cell 11 may be configured to be melted through when the explosion-proof valve 111 is opened. When the battery cell 11 undergoes thermal runaway, the explosion-proof valve 111 is opened and high-temperature fumes are sprayed out. The high-temperature fumes may quickly melt through a side that is of the spray clamping bar 121 and that faces toward the battery cell 11. A channel of the spray clamping bar 121 is in communication with the thermal management system 13, so that the thermal management system 13 may provide pressure to the cooling liquid in the spray clamping bar 121, to cause the cooling liquid in the spray clamping bar 121 to be quickly sprayed out from a melt-through position to an opened anti-expansion valve, to reduce the temperature of the battery cell 11.

According to this embodiment of the present application, the spray clamping bar 121 is disposed, so that when the spray clamping bar 121 enhances the structural strength, and the battery cell 11 undergoes thermal runaway, the spray clamping bar 121 can be melted through and spray out the cooling liquid in the channel of the spray clamping bar to control the thermal runaway, thereby improving safety performance of the battery 10.

According to some embodiments of the present application, as shown in FIG. 8, a width of the spray clamping bar 121 is greater than a width of the explosion-proof valve 111. The width of the spray clamping bar 121 is set to be greater than the width of the explosion-proof valve 111, so that the spray clamping bar 121 can cover the explosion-proof valve 111, thereby improving a temperature reducing effect of spraying.

According to some embodiments of the present application, as shown in FIG. 8, the battery cell 11 may include the end cap 110, the explosion-proof valve 111 may be mounted in the end cap 110, and the spray clamping bar 121 may be adhered to the end cap 110.

In this implementation, the end cap 110 may be an end cap 110 on a side that is of the battery cell 11 and on which a terminal post is disposed, and the explosion-proof valve 111 may be mounted in the end cap 110. The spray clamping bar 121 is adhered to the end cap 110, so that the spray clamping bar 121 is directly opposite to the explosion-proof valve 111, and the spray clamping bar 121 can be melted through when the explosion-proof valve 111 is opened.

Strength of an end face of the explosion-proof valve 111 is relatively weak. Although the spray clamping bar 121 is directly opposite to the explosion-proof valve 111, during assembly of the spray clamping bar 121, an adhesive is coated on the end cap 110 around the explosion-proof valve 111, so that the spray clamping bar 121 is actually adhered to the end cap 110, and a force generated when the spray clamping bar 121 undergoes load-induced deformation directly acts on the end cap 110, which has a small impact on the end face of the explosion-proof valve 111, and is not easy to damage the explosion-proof valve 111, thereby improving structural stability.

According to this embodiment of the present application, the spray clamping bar 121 is adhered to the end cap 110, so that a connection position of the spray clamping bar 121 avoids the explosion-proof valve 111 as much as possible, thereby preventing excessive adhesion from affecting an external structure of the explosion-proof valve 111.

According to some embodiments of the present application, the spray clamping bar 121 may be made of a plastic material. By setting the spray clamping bar 121 to be made of the plastic material, costs are saved, and the spray clamping bar 121 can be quickly melted through when the battery cell 11 undergoes thermal runaway. The material of the spray clamping bar 121 includes, but is not limited to, polypropylene (PP), polyethylene (PE), polyvinyl chloride (PVC), polystyrene (PS), and the like.

According to some embodiments of the present application, the spray clamping bar 121 may be made of a metal material. A side that is of the spray clamping bar 121 and that faces toward the explosion-proof valve 111 may be provided with a through hole directly opposite to the explosion-proof valve 111. A sealing member for sealing the through hole may be disposed in the through hole. The sealing member may be configured to unseal the through hole when the explosion-proof valve 111 is opened.

In this implementation, the spray clamping bar 121 is set to be made of the metal material, to improve structural strength of the spray clamping bar 121 and improve anti-expansion strength of the battery 10. The through hole may be in communication with the channel in the spray clamping bar 121. The through hole is provided on the spray clamping bar 121 and the sealing member is disposed in the through hole, so that when the sealing member seals the through hole, the channel is in a sealed state, and the cooling liquid normally circulates. When the battery cell 11 undergoes thermal runaway and the explosion-proof valve 111 is opened, the sealing member may unseal the through hole, so that the through hole is opened, and the cooling liquid in the channel is sprayed out toward the explosion-proof valve 111 through the through hole.

In an example, the sealing member may be made of a plastic material, so that the high-temperature fumes can quickly melt the sealing member, thereby unsealing the through hole by the sealing member. In another example, the sealing member may alternatively be a thermosensitive switch, which actively unseals the through hole when exposed to the high-temperature fumes.

According to this embodiment of the present application, the spray clamping bar 121 is set to be made of the metal material, thereby improving structural strength of the spray clamping bar 121. The through hole and the sealing member are set, so that when the battery cell 11 undergoes thermal runaway and the explosion-proof valve 111 is opened, the sealing member can quickly unseal the through hole, to enable the cooling liquid to spray out.

According to some embodiments of the present application, as shown in FIG. 2, FIG. 3, FIG. 6, and FIG. 7, the battery 10 may further include an FPC 15, arranged in the first direction. The FPC 15 is disposed on a side that is of the spray clamping bar 121 and that faces away from the battery cell 11. The FPC 15 may be adhered to the spray clamping bar 121 or may be connected to the spray clamping bar 121 through snapping. This is not specifically limited herein. The FPC 15 is disposed on the spray clamping bar 121, to optimize space layout and improve space utilization.

According to some embodiments of the present application, as shown in FIG. 6 and FIG. 7, the clamping bar 12 may include a cold pipe clamping bar 122, and the cold pipe clamping bar 122 may be adhered to one end that is of the end caps 110 of the plurality of battery cells 11 and that is in the second direction.

In this implementation, the clamping bar 12 may include the cold pipe clamping bar 122, and the cooling liquid circulates in a channel in the cold pipe clamping bar 122, so that the cold pipe clamping bar 122 can perform heat exchange with the battery cell 11, thereby assisting in thermal management on the battery cell 11. The cold pipe clamping bar 122 is adhered to a shoulder portion of the battery cell 11, and the shoulder portion of the battery cell 11 is two ends that are of the end cap 110 of the battery cell 11 and that are in the second direction. The cold pipe clamping bar 122 is adhered to one shoulder portion of the battery cell 11, so that when assembly of components such as a terminal post and a busbar on the end cap 110 is not affected, anti-expansion strength of the battery 10 can be increased.

According to this embodiment of the present application, the cold pipe clamping bar 122 is disposed, so that the overall structural strength is improved, and thermal management may be provided for the battery cell 11.

According to some embodiments of the present application, as shown in FIG. 6, the battery 10 may include a plurality of groups of battery cells 11 arranged in the second direction, and one end of end caps 110 of two adjacent groups of battery cells 11 that are close to each other is adhered to one cold pipe clamping bar 122.

To improve the capacity of the battery 10 and optimize the layout of the battery cell 11, the battery 10 may include a plurality of groups of battery cells 11 arranged in the second direction. Side walls of two adjacent groups of battery cells 11 may be in contact with each other or disposed at a specific distance.

One end of end caps 110 of the two adjacent groups of battery cells 11 that are close to each other is adhered to a same cold pipe clamping bar 122, to reduce a quantity of the cold pipe clamping bars 122 when the plurality of groups of battery cells 11 are disposed, and optimize space layout.

According to this embodiment of the present application, one cold pipe clamping bar 122 located between two groups of battery cells 11 is connected to the two groups of battery cells 11, thereby improving structural strength, optimizing space layout, and improving space utilization.

According to some embodiments of the present application, the cold pipe clamping bar 122 may be made of a metal material or a non-metal material. In this implementation, the cold pipe clamping bar 122 mainly plays a role of improving anti-expansion strength of the battery 10 and assisting in thermal management. Therefore, the material of the cold pipe clamping bar 122 includes, but is not limited to, a metal material with good thermal conductivity such as iron and aluminum alloy, or a non-metal material with good thermal conductivity such as polyimide and polyamide.

According to some embodiments of the present application, as shown in FIG. 6 and FIG. 7, the clamping bar 12 may include the spray clamping bar 121 and the cold pipe clamping bar 122. The spray clamping bar 121 may be disposed corresponding to explosion-proof valves 111 of a group of a plurality of battery cells 11. The cold pipe clamping bar 122 may be adhered to one end that is of the end caps 110 of the plurality of battery cells 11 and that is in the second direction.

In this implementation, the explosion-proof valve 111 of the battery cell 11 is disposed on a middle portion that is of the end cap 110 and that is in the second direction, so that the spray clamping bar 121 is connected to the middle portion that is of the end cap 110 and that is in the second direction, and the cold pipe clamping bar 122 is connected to one end that is of the end cap 110 and that is in the second direction. The spray clamping bar 121 and the cold pipe clamping bar 122 are disposed to improve overall structural strength, and improve a thermal management effect and safety performance of the battery 10.

According to some embodiments of the presence application, the present application further provides a power consuming apparatus, including a battery 1010 according to any one of the foregoing solutions. In addition, the battery 1010 is configured to provide electric energy to the power consuming apparatus.

According to the power consuming apparatus according to the embodiments of the present application, the battery 10 according to any one of the foregoing technical solutions is used to help improve use stability and safety of the power consuming apparatus.

The power consuming apparatus may be any one of the foregoing devices or systems in which the battery 1010 is used.

According to some embodiments of the present application, referring to FIG. 2 to FIG. 8, the present application provides a battery 10. The battery 10 includes a box body, at least one group of battery cells 11, a clamping bar 12, and an FPC 15.

Each group of battery cells 11 include a plurality of battery cells 11 arranged in a first direction, the plurality of groups of battery cells 11 are distributed in a second direction, and the first direction intersects with the second direction.

A channel for accommodating a cooling liquid is provided in the clamping bar 12, and the channel is connected to a thermal management system 13 of the battery 10, so that the cooling liquid in the thermal management system 13 can flow into the channel. The clamping bar 12 extends in the first direction, and is connected to end caps 110 of a group of a plurality of battery cells 11. A plurality of clamping bars 12 may be disposed. The plurality of clamping bars 12 are distributed in the second direction. At least one of the plurality of clamping bars 12 may be connected to the box body. The clamping bar 12 may be made of a metal material or a non-metal material, such as aluminum alloy or plastic.

The clamping bar 12 includes a spray clamping bar 121 and a cold pipe clamping bar 122. An explosion-proof valve 111 is disposed on a middle portion of the end cap 110 of the battery cell 11. The spray clamping bar 121 is directly opposite to the explosion-proof valve 111, and a width of the spray clamping bar 121 is not less than a width of the explosion-proof valve 111. The spray clamping bar 121 is adhered to the end caps 110 located on two sides of the explosion-proof valve 111. A side that is of the spray clamping bar 121 and that faces toward the explosion-proof valve 111 is configured to be melted through when the explosion-proof valve 111 is opened. The FPC 15 is disposed on a side that is of the spray clamping bar 121 and that faces away from the battery cell. The cold pipe clamping bar 122 is connected to an end portion that is of the end cap 110 and that is in the second direction, and one end of end caps 110 of two adjacent groups of battery cells 11 that are close to each other is adhered to one cold pipe clamping bar 122.

It needs to be noted that the embodiments in the present application and the features in the embodiments may be combined with each other without causing any conflict.

The foregoing descriptions are merely preferred embodiments of the present application, and are not intended to limit the present application. For a person skilled in the art, various modifications and changes may be made in the present application. Any modification, equivalent replacement, or improvement made without departing from the spirit and the principle of the present application shall fall within the protection scope of the present application.

## Claims

1. A battery, comprising:
a box body;
at least one group of battery cells mounted in the box body, wherein each group of battery cells comprise a plurality of battery cells arranged in a first direction; and
a clamping bar, wherein a channel for accommodating a liquid is provided in the clamping bar, and the clamping bar extends in the first direction and is connected to the plurality of battery cells.

2. The battery according to claim 1, further comprising:
a thermal management system, wherein the thermal management system is mounted in the box body, the thermal management system is configured to perform heat exchange with the battery cell, and the thermal management system is in communication with the channel.

3. The battery according to claim 2, wherein an end portion that is of the clamping bar and that is in the first direction is disposed by extending beyond the battery cell, a connector component is disposed on the end portion of the clamping bar, and the channel is connected to the thermal management system through the connector component.

4. The battery according to any one of claims 1 to 3, comprising:
a beam structure, disposed on a side that is of a group of battery cells and that is in the first direction; and
a connection terminal, disposed at a position that is of the clamping bar and that corresponds to the beam structure and extending in a lateral direction of the clamping bar, wherein the clamping bar is connected to the beam structure through the connection terminal.

5. The battery according to any one of claims 1 to 4, wherein a plurality of clamping bars that are distributed in a second direction are disposed, at least one clamping bar is connected to the box body, and the second direction intersects with the first direction.

6. The battery according to any one of claims 1 to 5, wherein a wall thickness M1 of the clamping bar satisfies:
0.5 mm≤M1≤3.5 mm.

7. The battery according to any one of claims 1 to 6, wherein a thickness M2 that is of the channel and that is in a direction close to and away from the battery cell satisfies:
1 mm≤M2≤6 mm.

8. The battery according to any one of claims 1 to 7, wherein the clamping bar comprises:
a spray clamping bar, wherein the spray clamping bar is disposed corresponding to explosion-proof valves of the plurality of battery cells, and a side that is of the spray clamping bar and that is close to the battery cell is configured to be melted through when the explosion-proof valve is opened.

9. The battery according to claim 8, wherein a width of the spray clamping bar is greater than a width of the explosion-proof valve.

10. The battery according to claim 9, wherein the battery cell comprises an end cap, the explosion-proof valve is mounted in the end cap, and the spray clamping bar is adhered to the end cap.

11. The battery according to any one of claims 8 to 10, wherein the spray clamping bar is made of a plastic material.

12. The battery according to any one of claims 8 to 11, wherein the spray clamping bar is made of a metal material, a side that is of the spray clamping bar and that faces toward the explosion-proof valve is provided with a through hole directly opposite to the explosion-proof valve, a sealing member for sealing the through hole is disposed in the through hole, and the sealing member is configured to unseal the through hole when the explosion-proof valve is opened.

13. The battery according to any one of claims 8 to 12, further comprising:
an FPC, arranged in the first direction, wherein the FPC is disposed on a side that is of the spray clamping bar and that faces away from the battery cell.

14. The battery according to any one of claims 1 to 13, wherein the clamping bar comprises:
a cold pipe clamping bar, wherein the cold pipe clamping bar is adhered to one end that is of end caps of the plurality of battery cells and that is in the second direction.

15. The battery according to claim 14, wherein the battery comprises a plurality of groups of battery cells arranged in the second direction, and one end of end caps of two adjacent groups of battery cells that are close to each other is adhered to one cold pipe clamping bar.

16. The battery according to claim 14 or 15, wherein the cold pipe clamping bar is made of a metal material or a non-metal material.

17. The battery according to any one of claims 1 to 16, wherein the clamping bar comprises:
the spray clamping bar, wherein the spray clamping bar is disposed corresponding to the explosion-proof valves of the plurality of battery cells; and
the cold pipe clamping bar, wherein the cold pipe clamping bar is adhered to the one end that is of the end caps of the plurality of battery cells and that is in the second direction.

18. A power consuming apparatus, comprising:
the battery according to any one of claims 1 to 17, wherein the battery is configured to supply power to the power consuming apparatus.
